## Europäisches Patentamt
## European Patent Office
## Office européen des brevets

(11) Veröffentlichungsnummer: **0 028 847**

**A1**

(12) **EUROPÄISCHE PATENTANMELDUNG**

(21) Anmeldenummer: **80200921.7**

(22) Anmeldetag: **01.10.80**

(51) Int. Cl.³: **B 23 Q 11/10**

(30) Priorität: **13.11.79 CH 10121/79**

(43) Veröffentlichungstag der Anmeldung:
**20.05.81 Patentblatt 81/20**

(84) Benannte Vertragsstaaten:
**BE CH DE FR GB IT LI SE**

(71) Anmelder: **Werkzeugmaschinenfabrik Oerlikon-Bührle AG**
**Birchstrasse 155**
**CH-8050 Zürich(CH)**

(72) Erfinder: **Bühler, Josef**
**Anna Heer-Strasse 30**
**CH-8057 Zürich(CH)**

(72) Erfinder: **Kistler, Viktor**
**Im Sunnebüel 7**
**CH-8800 Thalwil(CH)**

(54) **Vorrichtung zum Zuführen von Kühlmittel an eine Bearbeitungsstelle auf einer Verzahnungsmaschine.**

(57) Eine solche Vorrichtung weist mindestens ein über Haltemittel auf die Bearbeitungsstelle (11) einstellbares Zuführrohr (12) auf.

Um eine Behinderung des Werkzeug- oder Werkstückwechsels bei sehr genau und nahe an die Bearbeitungsstelle (11) herangeführten Zuführrohren (12) zu vermeiden, ist eine Schwenkvorrichtung (25) vorgesehen. Diese enthält einen Schwenkteil (14) zum Verschwenken des Zuführrohres (22) aus Ruhestellungen in eine Arbeitsstellung (31) sowie Verriegelungsmittel (16, 20, 21, 22, 26) zum Verriegeln des Schwenkteils (14) in der Arbeitsstellung (31).

FIG. 2

EP 0 028 847 A1

Vorrichtung zum Zuführen von Kühlmittel an eine Bearbeitungsstelle auf einer Verzahnungsmaschine

Die Erfindung betrifft eine Vorrichtung zum Zuführen von Kühlmittel an eine Bearbeitungsstelle auf einer Verzahnungsmaschine mit mindestens einem, über Haltemittel auf die Bearbeitungsstelle einstellbaren Zuführrohr.

Es sind Vorrichtungen gemäss dem Oberbegriff des Patentanspruches 1 aus der Praxis bekannt, bei denen das Kühlmittel über mehrere, gegeneinander verdrehbare oder im Winkel gegeneinander einstellbare Rohrabschnitte in ein biegbares Zuführrohr geleitet wird. Durch Einstellen der verschiedenen Rohrabschnitte gegeneinander mittels Haltemittel, sowie durch Biegen des Zuführrohres kann so eine Austrittsöffnung des Zuführrohres genau auf die Bearbeitungsstelle gerichtet werden.

Nachteilig ist bei dieser Vorrichtung der Umstand, dass bei jedem Werkzeug- oder Werkstückwechsel diese Rohre und Zuführrohre neu eingestellt werden müssen, was umso mehr Zeit beansprucht, desto genauer man das Kühlmittel an die Bearbeitungsstelle heranführen will.

Aus der Praxis sind weitere Vorrichtungen gemäss dem Oberbegriff des Patentanspruches 1 bekannt, bei denen das Kühlmittel in ein Zuführrohr mit breitgezogener Austrittsöffnung geleitet wird und von dort in einem breiten Strom zur Bearbeitungsstelle fliesst.

Diese Vorrichtung hat den Nachteil, dass das Kühlmittel in einiger Entfernung von der Bearbeitungsstelle aus dem Zuführrohr austritt und somit unkontrolliert über das Werkzeug und das Werkstück hinwegfliesst. Dadurch ist eine optimale Kühlung und Schmierung der am stärksten belasteten Teile wie Schneiden etc. nicht sichergestellt.

- 2 -

Die Erfindung wie sie in den Patentansprüchen gekennzeichnet ist, löst die Aufgabe, eine Vorrichtung zum Zuführen von Kühlmittel an eine Bearbeitungsstelle einer Verzahnungsmaschine zu schaffen, die es gestattet, das Kühlmittel sehr nahe und gezielt an die Bearbeitungsstelle heranzuführen und die beim Werkzeug- oder Werkstückwechsel keine Behinderung darstellt.

Der Vorteil der erfindungsgemässen Lösung besteht darin, dass das Zuführrohr zum Werkzeug- oder Werkstückwechsel einfach weggeschwenkt werden kann, wobei es nachher wieder genau die gleiche Arbeitsstellung einnimmt. Dadurch kann auch beim Schneiden einer Serie gleicher Werkstücke bzw. Zahnräder die Zufuhr von Kühlmittel ohne Zeitaufwand für jedes Werkstück optimal eingestellt sein. Besonders vorteilhaft ist es, Vorrichtungen mit mehreren Zuführrohren auf diese Weise auszuführen, weil damit eine ausserordentlich gute Versorgung der Bearbeitungsstelle mit Kühlmittel möglich ist, ohne den Bedienungsaufwand zu erhöhen.

- 3 -

Im folgenden wird die Erfindung anhand von ein Ausführungsbeispiel darstellenden Zeichnungen erläutert.

Es zeigen:

Fig. 1   eine Ansicht eines Teils einer Verzahnungsmaschine mit einer Vorrichtung zum Zuführen von Kühlmittel;

Fig. 2   eine Aufsicht auf eine Verzahnungsmaschine gemäss Fig. 1;

Fig. 3   ein Einzelteil der Vorrichtung gemäss Fig. 1.

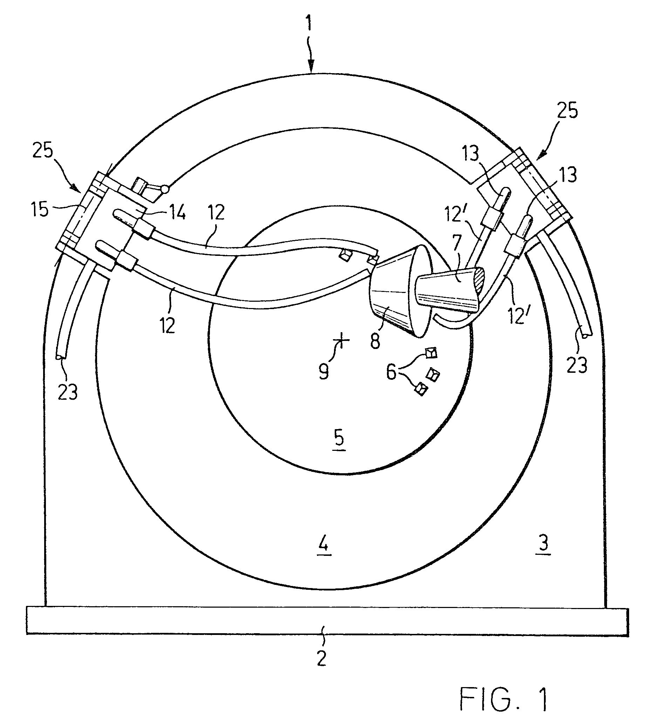

In Fig. 1 ist ein Teil einer Verzahnungsmaschine vereinfacht dargestellt. Diese Verzahnungsmaschine 1 weist ein auf einem Sockel 2 gelagertes Spindelgehäuse 3 mit einer in diesem drehbaren Wälztrommel 4 auf. Auf der Wälztrommel 4 ist als Werkzeug ein Messerkopf 5 mit Messern 6, von denen nur ein Teil dargestellt ist, drehbar gelagert. Eine Spindel 7 ist in einem nicht näher dargestellten Spindelgehäuse gelagert und trägt einen Zahnradrohling als Werkstück 8.

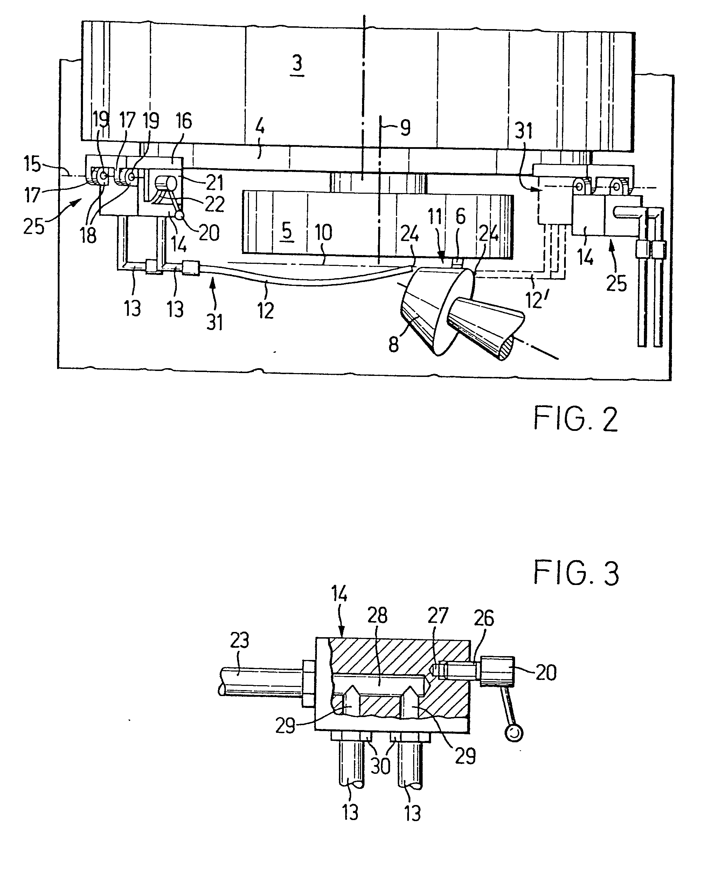

Durch die Drehung des Messerkopfes 5 um eine Achse 9 (siehe auch Fig. 2) werden die Messer 6 während der Bearbeitung im Bereiche einer Bewegungsebene 10 bewegt. Im Bereiche eines kleinsten Abstandes zwischen der Bewegungsebene 10 und dem Werkstück 8 ist eine Bearbeitungsstelle 11 gelegen. Auf dieser Bearbeitungsstelle 11 sind Austrittsöffnungen 24 von Zuführrohren 12, 12' von auf der Wälztrommel 4 angeordneten Schwenkvorrichtungen 25 gerichtet.

Diese Schwenkvorrichtungen 25 bestehen aus einem Schwenkteil 14, welcher um eine Schwenkachse 15 schwenkbar auf einer Grundplatte 16 gelagert ist, wobei die Grundplatte 16 in nicht näher dargestellter, aber an sich bekannter Art und Weise auf der Wälztrommel 4 befestigt ist. An der Grundplatte 16 wie auch am Schwenkteil 14 ist je ein Paar

- 4 -

Lageraugen 17 bzw. 18 angeordnet. Ein Lagerauge 17 zusammen mit einem Lagerauge 18, welche durch einen Bolzen 19 verbunden werden, bilden so ein Gelenk, deren zwei zwischen Schwenkteil 14 und Grundplatte 16 angeordnet sind. An der Grundplatte 16 ist ferner eine Klemmplatte 21 mit einem nach einer Seite offenen, bogenförmig verlaufenden Schlitz 22 befestigt. Dabei liegt das Zentrum des Bogens des Schlitzes 22 auf der Schwenkachse 15.

Fig. 3 zeigt einen Schwenkteil 14 teilweise geschnitten. Darin ist eine Schraube 26, die an einem Ende einen Klemmhebel 20 trägt, in einer Gewindebohrung 27 angeordnet. In den Schwenkteil 14 münden einerseits eine flexible Speiseleitung 23 und anderseits Rohrstücke 13. Am anderen Ende der Rohrstücke 13 sind die Zuführrohre 12 in an sich bekannter Weise angebracht (Fig. 1, 2). Im Innern des Schwenkteiles 14 treffen sich entsprechend eine Verteilbohrung 28 und zwei weitere Bohrungen 29. Die Rohrstücke 13 sind über entsprechende, an sich bekannte und nicht näher dargestellte, Haltemittel wie beispielsweise Verschraubungen 30 mit dem Schwenkteil 14 verbunden und münden in die Bohrungen 29. Entsprechend ist auch die Speiseleitung 23, welche in die Verteilbohrung 28 mündet mit dem Schwenkteil 14 verbunden. Der Schwenkteil 14 ist demnach gleichzeitig als Verteiler für das Kühlmittel ausgebildet.

In Fig. 2, rechte Bildhälfte ist die Schwenkvorrichtung 25 in vereinfachter Darstellung mit dem Schwenkteil 14 einmal in einer Ruhestellung (ausgezogene Linien) und einmal in seiner Arbeitsstellung 31 (gestrichelt gezeichnet) dargestellt. In der linken Bildhälfte ist der Schwenkteil 14 in seiner Arbeitsstellung gezeigt. Dabei liegt der Schwenkteil 14 mit einer Seitenfläche an der Grundplatte 16, die auch als Anschlag wirkt, an. Die hier nicht ersichtliche Schraube 26 erstreckt sich durch den Schlitz 22, so dass durch Drehen des Klemmhebels 20 der

- 5 -

Schwenkteil 14 an der Klemmplatte 21 festgeklemmt wird. Die Grundplatte 16 mit der Klemmplatte 21 sowie die Schraube 26 mit dem Klemmhebel 20 und dem Schlitz 22 bilden zusammen die Verriegelungsmittel für die Schwenkvorrichtung 25.

Wirkungsweise

Zum Kühlen und Schmieren der Bearbeitungsstelle 11 wird das Kühlmittel von einem nicht näher dargestellten Kühlmittelbehälter durch die Speiseleitungen 23 in die Schwenkteile 14 gepumpt, von wo aus dieses in die Zuführrohre 12 bzw. 12' verteilt wird. Diese Zuführrohre 12, 12' können so gebogen und durch Ausrichten der Rohrstücke 13 über deren Haltemittel derart eingestellt werden, dass deren Austrittsöffnungen 24 das Kühlmittel möglichst nahe und möglichst genau an das Werkzeug 5, 6 und das Werkstück 8 an der Bearbeitungsstelle 11 heranführen.

Bei jedem Werkzeugwechsel werden die Schwenkteile 14 mit den Zuführrohren 12, 12' aus der Arbeitsstellung 31 (Fig. 2) in eine Ruhestellung weggeschwenkt. Dabei bewegt sich die Schraube 26 mit dem Klemmhebel 20 durch den entsprechend gebogenen Schlitz 22 in der Klemmplatte 21. Die Werkzeuge 5,6 und die Werkstücke 8 können so ungehindert ausgewechselt werden. Werden diese gegen neue gleichdimensionierte Werkstücke 8 und gleiche Werkzeuge 5,6 ausgetauscht, so sind die Zuführrohre 12, 12' nach dem Zurückschwenken in die Arbeitsstellung automatisch wieder richtig eingestellt. Anpassen der Zuführrohre 12 an eine neue Bearbeitungsstelle 11 ist nur nötig, wenn ein Werkzeug 5, 6 oder ein Werkstück 8 anderer Dimension eingesetzt wird. Da die Schwenkvorrichtungen 25 auf der Wälztrommel 4 angeordnet sind, verfolgen die Austrittsöffnungen 24 auch beim Wälzen automatisch die sich längs der Bewegungsebene 10 verschiebende Bearbeitungsstelle 11.

Patentansprüche:

1. Vorrichtung zum Zuführen von Kühlmittel an eine Bearbeitungsstelle (11) auf einer Verzahnungsmaschine (1) mit mindestens einem, über Haltemittel auf die Bearbeitungsstelle (11) einstellbaren Zuführrohr (12), gekennzeichnet durch eine Schwenkvorrichtung (25) mit einem Schwenkteil (14) zum Verschwenken des Zuführrohres (12) aus Ruhestellungen in eine Arbeitsstellung (31) und mit Verriegelungsmitteln (16, 20, 21, 22, 26) zum Verriegeln des Schwenkteiles (14) in der Arbeitsstellung (31).

2. Vorrichtung gemäss Anspruch 1, dadurch gekennzeichnet, dass die Schwenkvorrichtung (25) auf einer Wälztrommel (4) angeordnet ist.

3. Vorrichtung gemäss Anspruch 1, dadurch gekennzeichnet, dass die Schwenkvorrichtung (25) eine Schwenkachse (15) aufweist.

4. Vorrichtung gemäss Anspruch 3, dadurch gekennzeichnet, dass die Schwenkachse (15) parallel zur Bewegungsebene (10) der Werkzeuge (5, 6) angeordnet ist.

5. Vorrichtung gemäss Anspruch 1, dadurch gekennzeichnet, dass der Schwenkteil (14) mehrere Zuführrohre (12) aufweist.

6. Vorrichtung gemäss Anspruch 5, dadurch gekennzeichnet, dass der Schwenkteil (14) eine Verteilbohrung (28) und damit verbundene Bohrungen (29) als Anschlüsse für die Zuführrohre (12) aufweist.

7. Vorrichtung gemäss Anspruch 1, dadurch gekennzeichnet, dass die Verriegelungsmittel einen Anschlag (16) für den Schwenkteil (14) sowie weitere Mittel (20, 21, 22, 26) zum Festhalten des Schwenkteils (14) am Anschlag (16) umfassen.

8. Vorrichtung gemäss Anspruch 7, dadurch gekennzeichnet, dass als Mittel zum Festhalten des Schwenkteils (14) eine Schraube (26) mit einem Klemmhebel (20) sowie eine Klemmplatte (21) mit einem Schlitz 22, vorgesehen sind.

FIG. 1

FIG. 2

FIG. 3

0028847

Europäisches Patentamt

**EUROPÄISCHER RECHERCHENBERICHT**

Nummer der Anmeldung
EP 80 20 0921

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 905 579 (HECKERT)<br><br>* Patentansprüche 1 und 7 *<br><br>-- | 1,3,5 |
| | DE - A - 2 437 739 (WEBER)<br><br>* Patentanspruch 1; Seite 13, Zeilen 7 bis 10 *<br><br>-- | 1,3 |
| A | US - A - 3 726 363 (SUSSMAN) | |
| A | US - A - 2 940 473 (SMITH) | |
| A | CH - A - 371 318 (DIENER) | |
| A | GB - A - 566 555 (HERBERT) | |
| A | DE - A - 2 013 692 (LITTON) | |
| A | FR - A - 1 449 303 (GRUET) | |
| A | FR - A - 1 150 503 (SOZET) | |

KLASSIFIKATION DER ANMELDUNG (Int Cl.³)

B 23 Q 11/10

RECHERCHIERTE SACHGEBIETE (Int. Cl.³)

B 23 Q 11/00
B 23 F 23/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag . | 11-02-1981 | DE GUSSEM |

EPA form 1503.1   06.78